# EUROPÄISCHE PATENTSCHRIFT

(11) **EP 3 495 431 B1**
(45) Veröffentlichungstag und Bekanntmachung des Hinweises auf die Patenterteilung: **21.07.2021**
(21) Anmeldenummer: 17206346.3
(22) Anmeldetag: 11.12.2017
(51) Int. Cl.: C09D 5/00

(54) **BESCHICHTUNGSMITTEL FÜR SCHRAUBEN**
COATING AGENT FOR SCREWS
AGENT DE REVÊTEMENT POUR VISSERIE

(43) Veröffentlichungstag der Anmeldung: 12.06.2019
(73) Patentinhaber: SFS Intec Holding AG, 9435 Heerbrugg (CH)
(72) Erfinder: ANDERSAG, Markus, 9000 St. Gallen (CH); SCHULER, Oliver, 6934 Sulzberg (AT)

(56) Entgegenhaltungen:
- EP-A1- 2 216 576
- EP-A2- 1 233 167
- EP-A2- 2 000 680
- WO-A1-2008/014966
- DE-A1-102016 208 510
- US-A- 4 891 268

## Beschreibung

Die vorliegende Erfindung befasst sich mit einem Beschichtungsmittel für Schrauben, insbesondere selbstbohrende, gewindeformende bzw. gewindeschneidende Schrauben, welches den Schraubvorgang wesentlich erleichtern kann.

### HINTERGRUND

In der Verbindungstechnik wird stets nach Verbesserungen gesucht, die Handhabung, Wirtschaftlichkeit und Sicherheit betreffen. Insbesondere im Metallbau, bei der Montage im Bauwesen kommt es vielfach darauf an, eine Vielzahl von Elementen schnell und sicher miteinander zu verbinden. Ein wesentlicher Aufwand liegt dabei klassisch im Vorbohren der Bauteile, die zu verbinden sind. Diese müssen temporär fixiert, gebohrt, das Bohrloch freigemacht und ein Verbinder bzw. Befestiger eingebracht und fixiert werden.

Dahingehend sind selbstbohrende Schrauben mit einem eigenen Bohrkopf von Vorteil, weil sie diesen Mehrstufenprozess stark vereinfachen. Ein grundsätzliches Problem dabei besteht jedoch darin, dass dieser Bohrkopf zwar nur einmal eingesetzt wird, aber speziell bei der Verwendung in Metallbauteilen trotzdem entsprechend ausgelegt werden muss. Das erhöht die Herstellungskosten für so einen Befestiger deutlich. Ebenso muss das Gewinde einer Selbstbohrschraube darauf ausgelegt sein, unmittelbar anschliessend an den Bohrvorgang ein Gegengewinde in das Umgebungsmaterial einzuformen, das für hohe Auszugskräfte des gesetzten Befestigers sorgt. Bei einem reinen Bohrer, Fräser oder einem anderem spanenden Werkzeug kann durch eine hochwertige Materialwahl und eine aufwändige Oberflächenvergütung (Aluminiumnitrid, Cr-AI-Nitride, Carbide, diamond-like-carbon DLC) die Anwendung optimiert werden. Diese Mittel kommen bei einer Bohrschraube bzw. gewindeformenden Schraube aus Kostengründen nicht in Frage.

Gerade bei selbstbohrenden Schrauben entsteht durch den Bohrvorgang eine enorme thermische Belastung aller Komponenten. Diese entsteht zum einen durch die Reibung der Bohrschraube im Bohrloch - was vor allem die Bohrschneiden betrifft. Deren Standzeit nimmt drastisch ab, wenn das Material so heiss wird, dass eine plastische Verformung des Bohrkopfes eintritt. Üblicherweise versagt eine Schraube in diesem Moment, weil beispielsweise die Schraube abbricht oder die Bohrschneiden ihre Integrität verlieren.

Eine weitere Quelle thermischer Energie ist die ins gebohrte Bauteil eingebrachte Verformungsenergie, wenn die Bohrschneiden den Span bilden. Ein Grossteil dieser Energie verbleibt im Span, weshalb es wichtig ist, eine kontinuierliche und unbehinderte Spanabfuhr zu ermöglichen.

Die Wärmetransportvorgänge für den oben angesprochenen Anwendungsfall sind hochkomplex, stark geometrie- und materialabhängig und lassen daher sich nicht als einzelner linearer Prozess beschreiben.

### STAND DER TECHNIK

Es ist im Stand der Technik bekannt, dass sich Bohrschrauben und gewindeformende Schrauben beschichten lassen und es wurden auch mehrfach Verfahren und Beschichtungsmittel vorgeschlagen, um den vorbeschriebenen Anwendungszweck zu erreichen. Teilweise wird hierbei von Gleitmitteln gesprochen, weil durch die herabgesetzte Reibung der Eintrag thermischer Energie ins Material verringert wird. Trockene Gleitfilme lassen sich erzielen, indem mittels Tauchverfahren, Sprühverfahren oder Zentrifugenverfahren ein Beschichtungsmittel auf die unbehandelten Befestiger aufgebracht wird und anschliessend e.g getrocknet oder UV-gehärtet und so bis zum Einsatz auf der Oberfläche fixiert werden. Die Überzüge können entsprechend hart, wachsig, spröde oder elastisch ausfallen.

Beispielsweise ist es bekannt, für den Einsatz auf Schrauben eine Suspension microdispergierter Festschmierstoffe in wässriger Lösung zu verwenden, die nach einer Trocknung bei Raumtemperatur den Reibwert im späteren Einsatz herabsetzen helfen. Hierzu zählen z.B. die Produkte DF 911 und DF 921 der Firma microGLEIT.

Als Zuschlagstoffe für Anstriche, Verputze oder zur Beschichtung von Kleidung sind mikroverkapselte PCM (phase-change-materials) bekannt, die in der Lage sind, reversibel latente Wärme zu speichern und wieder abzugeben. Diese Zuschlagstoffe liegen als Lösungen (Salzhydrate, hier nicht betrachtet) oder mikroverkapselt vor. Diese werden als Wärmepuffer verwendet.

Weiter beschreibt das Dokument EP 2 000 680 ein Beschichtungsmittel für eine gewindeformende Schraube mit einer Mischung aus Calciummontanat und einer Montansäure in einer Thermoplastharz-Emulsion.

Die WO 2016/023855 beschreibt eine Bohrschraube aus austenitischem bzw. nichtrostendem Stahl mit einer galvanisch aufgebrachten harten Beschichtung, auf die wiederum die eine Beschichtung aus einem schmierenden bzw. wärmeabführenden Stoff aufgebracht wird.

Im Dokument DE 10 2016 208 510 A1 wird eine temporäre Verbindung von Komponenten bei der Montage von Flugzeugbauteilen beschrieben. Dazu wird die Unterseite eines Schraubenkopfes mit einem Festschmierstoff und/oder eine Unterlegscheibe versehen, wobei ferner eine Hülse an der Unterseite des Schraubenkopfes vorgesehen sein kann, die wiederum aus Kunststoff und/oder Metall sein kann.

Die EP 2 216 576 A1 befasst sich mit einer Schraubverbindung von Rohren, bevorzugt für Bohrgestänge. Beschrieben wird eine erste Kontaktfläche, die mit einer festen Schmierstoffschicht als Deckschicht versehen ist und eine zweite Kontaktfläche, die eine feste Korrosionsschutzschicht als Deckschicht aufweist, welche aus einem UV-aushärtbaren Harz besteht. Die Zusammensetzung der Schmierstoffschichten wird als bestehend aus 70-95% (Masse) einer Matrix und 5-30% (Masse) eines Schmierstoffpulvers beschrieben.

Das Dokument WO 2008/014966 beschreibt ein Mehrkomponenten-Kunstharzsystem, welches in ein Loch eingebracht wird und in das nach hinreichendem Aushärten ein Befestiger eingetrieben werden kann. Dem Mehrkomponenten-Kunstharzsystem kann ein Zusatz von Festschmierstoffen beigefügt werden, um eine Verringerung der für das Eintreiben von Befestigern benötigten Kräfte zu erzielen. Die Offenbarung zählt dazu sowohl Kunststoffe, Paraffine, Silikone wie auch Graphit und Molybdänsulfid auf.

Ähnlich schlägt die EP1 233 167 A2 einen Zwei-Komponentenharz-Klebstoff vor, der mit einem Festschmierstoff vermischt wird. Als Beispiele für Festschmierstoffe werden Molybdänsulfid, Graphitpulver bzw. Bornitrid genannt.

Die Schrift US 4,891,268 beschreibt ein Korrosionsschutzmittel, welches unter anderem Festschmierstoffe enthält. Erwähnt werden speziell auf MoS2, Graphit, PTFE und deren Mischungen.

Tests haben ergeben, dass die kommerziell erhältlichen bzw. aus dem Stand der Technik bekannten Mittel und Verfahren die Bohr- bzw. Gewindefurchleistung zwar erhöhen, aber die Anforderungen an die heutige Montageleistung nicht erfüllen können. Die Aufgabe der Erfindung bestand also darin, ausgehend vom vorgenannten Stand der Technik ein Beschichtungsmittel zu beschreiben, welches deutlich bessere Bohrleistung, geringere Einformmomente und verbesserte Handhabung solcher gattungsgemässer Schrauben erlaubt.

### BESCHREIBUNG DER ERFINDUNG

Im Folgenden werden unter dem Begriff Befestiger generell Bauteile verstanden, welche dazu verwendet werden, um andere Bauelemente lös- oder unlösbar miteinander zu verbinden. Insbesondere werden im Zusammenhang mit dieser Erfindung unter dem Begriff "Befestiger" Schrauben verstanden, insbesondere selbstbohrende Schrauben und gewindefurchende Schrauben. Auch andere Befestiger, z.B. Schrauben mit Verdrängerspitze oder punktförmiger Spitze, aber auch Bolzen, Nägel, Niete o.ä. können von einer erfindungsgemässen Beschichtung bzw. einem erfindungsgemässen Beschichtungsmittel profitieren, sind aber nicht als Bestandteil der Erfindung zu betrachten.

Unter Beschichtung sei im Folgenden im weitesten Sinne ein Überzug, eine Schicht, ein Belag auf einer Oberfläche verstanden. Dabei sind nicht ausschliesslich homogen dicke, geschlossene Beschichtungen gemeint, sondern auch solche, die nur auf Teilen einer Oberfläche eines Befestigers angebracht sind und in der Auftragungsdicke variieren können. Die Beschaffenheit einer Beschichtung kann fest, ledrig, wachsig, glasartig oder zähfliessend sein.

Mit Beschichtungsmittel sei im Kontext der vorliegenden Erfindung jedes Mittel gemeint, mit dem eine Beschichtung erzielt wird. Die Beschaffenheit des Beschichtungsmittels kann flüssig sein, fest, pulverförmig oder gasförmig. Das Beschichtungsmittel kann, wenn als Beschichtung auf einem Befestiger aufgebracht, reibungsmindernde wie auch (aktiv) kühlende Wirkung aufweisen.

Mit Beschichtungsverfahren seien alle Massnahmen angesprochen, mit denen eine Beschichtung erzielt werden kann. Dies können Tauchverfahren in Flüssigkeiten, Besprühen, Bedampfen, Kondensieren aus der Gasphase, Bestäuben oder Auftragen durch Aufreiben gemeint sein. Zu den Beschichtungsverfahren werden auch jene Prozessschritte gerechnet, die dazu dienen, a) die flächige Verteilung eines aufgebrachten Beschichtungsmittels zu verbessern, wie Rotierenlassen, Schwenken im Sprühstrahl, Zentrifugieren z.B. nach einem Tauchprozess; aber auch Maskieren von Teilen eines Befestigers um eine Beschichtung auf bestimmten Teiloberflächen eines Befestigers (z.B. am Kopf) zu verhindern oder umgekehrt gerade zu verbessern (seed layer). Ferner zählen dazu b) Prozessschritte, um ein aufgebrachtes Beschichtungsmittel fester an die zu beschichtenden Oberfläche zu binden; dies können je nach Beschichtungsmittel sein: Trocknungsverfahren (passives Verdunsten des Lösungsmittels an der Umgebung, unter Vakuum, in Trocknungsöfen, unter Gebläsen); Einbrennverfahren (thermisch, UV); chemische Reaktionen (Abbinden), evtl. mit der Oberfläche des Befestigers oder der umgebenden Atmosphäre; Vernetzung des Beschichtungsmittel zur Bildung der Beschichtung mittels Strahlung oder Aktivatoren.

Unter dem Begriff Lösung wird im vorliegenden Sachzusammenhang eine Flüssigkeit verstanden, die im chemischen Sinne ein homogenes Gemisch aus mindestens zwei chemischen Stoffen darstellen kann, aber auch als heterogenes Stoffgemisch, Emulsion oder Suspension vorliegen kann; auch zähflüssig als Schlamm oder Schlicker.

Ein Festschmierstoff im Sinne der vorliegenden Erfindung ist ein Schmierstoff, der als von der Lösung unterscheidbarer Bestandteil in der Lösung vorliegt, beispielsweise als Mikrogranulat. Darunter wird explizit auch verstanden, dass ein flüssiger oder wachsartiger Schmierstoff in einer Mikrokapsel vorliegt.

Bis zu einer Dicke von typischerweise ca. 3mm können bei Stahlblechen bzw. Blechstapeln ohne Vorbohrung gewindeformende Schrauben eingesetzt werden, die aus kaltumgeformtem C-Stahl gefertigt sind und eine sehr feine Spitze mit einem Spitzenwinkel von 20-30° aufweisen. Eine Bohrschraube wird also nur dort eingesetzt werden, wo eine gewindeformende Schraube ohne Bohrspitze versagen würde. Aus Versuchen ist bekannt, dass Bohrschrauben mit einer Beschichtung nach dem Stand der Technik, beispielsweise mit DF921, eine Standzeit bis 20s aufweisen, wenn sie in einem Bohrprüfstand mit 300N Vorschubkraft bei 1800 U/min eingesetzt wurden. Als Testmaterial wurde hierbei einmal ein Blechstapel aus 2mm Stahl S355 auf 10mm Stahl S500 (Anwendung 1) bzw. ein Einzelblech 13mm Stahl S355 (Anwendung 2) verwendet. Mit einer Beschichtung nach Stand der Technik sind Ausfallraten zwischen 20% (Anwendung 1) und 70% (Anwendung 1) zu verzeichnen. Für den Anwender ist das in der Realität sehr problematisch, weil die Nachbehandlung solcher gescheiterter Setzvorgänge zeit- und kostenintensiv ist.

Die im Rahmen der Erfindung vorgenommenen Versuche gingen daher sich daher von dem anwendungstypischen Fall aus, dass der Setzvorgang einer Bohrschraube im üblichen technischen Anwendungsumfeld ein Vorgang ist, der im Bereich von 5 bis 20 Sekunden dauert. Bei weicherem Material können höhere Durchdringungsleistungen erzielt werden als bei härterem Stahl, die in der Zeit erbrachte Leistung des Setzgeräts ist im Wesentlichen aber materialunabhängig.

Die technisch-physikalischen Vorgänge laufen also in einem sehr engen Zeitfenster ab. Zur Überraschung der Erfinder lassen sich jedoch enorme Bohrleistungssteigerungen bereits dadurch erzielen, wenn anstatt der im Stand der Technik bekannten Lösungen mit nur einer Festschmierstoffsorte Lösungen mit mindestens zwei Festschmierstoffsorten eingesetzt werden. Der Erfindung brachte die Erkenntnis, dass die Schmier- bzw. Kühlungswirkung der Festschmierstoffe vor allem gegen Einsatzende kritisch werden und dass die Kombination zweier Festschmierstoffe den Versagenszeitpunkt für diesen Anwendungsfall erheblich weiter hinausschiebt, als man es erwarten würde.

Die beschriebenen Festschmierstoffe erfahren im Anwendungsfall verschiedene, thermisch bedingte Phasenumwandlungen. Im einfachsten Fall sind dies ein Schmelzvorgang und ein Verdampfungsvorgang. Bei zwei verschiedenen Festschmierstoffen finden also zeitlich versetzt bis zu vier Phasenübergänge statt, die jeweils den Anstieg der thermischen Belastungen verzögern.

Daher lässt sich die vorliegende Erfindung wie folgt gliedern:
Eine selbstbohrende Schraube gemäss vorliegender Erfindung weist eine Beschichtung aus mindestens zwei unterschiedliche Festschmierstoffen auf, wobei der erste Festschmierstoff ein Thermoplast oder ein Wachs ist und der zweite Festschmierstoff mindestens ein weiterer Thermoplast. Bevorzugt, aber nicht zwingend liegen diese Festschmierstoffe in einer Lösung vor, quasi in einer Trägerflüssigkeit. Es ist aber auch denkbar, dass die Stoffe als Trockenmischung Anwendung finden.

Wenn eine Lösung Verwendung findet, dann bevorzugt als eine Lösung auf Wasserbasis, auf Alkoholbasis oder einem anderen, insbesondere organischen Lösungsmittel bzw. einer Mischung der vorgenannten Bestandteile. Aus verfahrenstechnischen Gesichtspunkten sowie Sicherheits- und Umweltaspekten sind wässrige Lösungen bevorzugt.

Besonders gute Ergebnisse werden erzielt, wenn die Festschmierstoffe als Mikrogranulat vorliegen, bevorzugt in einer Nenngrösse zwischen 5 und 20µm. Dadurch wird zum einen eine bessere Verteilung in der Beschichtung erzielt und damit eine bessere Verfügbarkeit der Festschmierstoffe im Einsatzfall.
Wie vorerwähnt sind der erste bzw. zweite Festschmierstoff unterschiedlich. So hat sich als Bestandteil des ersten Festschmierstoffs Polyethylen (PE) bewährt, als Bestandteils des zweiten Festschmierstoffes die
Thermoplaste Polyvinylchlorid (PVC) und / oder Polyvinylbutyral (PVB).

Alternativ zu einem Thermoplast als ersten Festschmierstoff kann auch Wachs eingesetzt werden, hierbei insbesondere Paraffin, Stearin oder eine Mischung hiervon. Wie vorerwähnt, können die Wachse als Granulat oder Microkapseln eingesetzt werden. In letzterem Fall können die Paraffine auch als Flüssigkeit in einer Kapselmembran vorliegen - und sollen, wie erwähnt als makroskopischer Festschmierstoff gelten. Insbesondere die als Wärmepuffer einsetzbaren PCM haben sich überraschend als gut verfügbarer und effektiver Festschmierstoff erwiesen. Der Einsatz gemäss Erfindung verzichtet auf die Reversibilität; vermutlich sind die verwendeten Wachskomponenten und die Möglichkeit, die Mikrokapseln gut auf dem Befestiger zu verteilen für die verbesserte Wirkung mit verantwortlich.

Die Mischungsverhältnisse zwischen erstem und zweitem Festschmierstoff ist bevorzugt zwischen 5:1 und 1:1 (bezogen auf das Gewicht).

Grundsätzlich lässt sich ein Verfahren zum Beschichten eines Befestigers mit folgenden Schritten beschreiben:
- Bereitstellen eines zu beschichtenden Befestigers
- Aufbringen eines Beschichtungsmittels wie oben beschrieben
- Verfestigen des aufgebrachten Beschichtungsmittels

Je nach Ausgangszustand des zu beschichtenden Befestigers kann vor dem eigentlichen Applikationsschritt eine Vorbehandlung erfolgen, die je nach Bedarf aus einem einzelnen Schritt, einer Abfolge von Schritten oder einer zyklischen Wiederholung eines oder mehrere Schritte bestehen kann. Unter Vorbehandlung kann gemeint sein ein Reinigungsschritt, das Abdecken von Teiloberflächen, das Vorbehandeln von Teiloberflächen zur Verbesserung der Aufnahmefähigkeit des Beschichtungsmittels. Diese Benetzung des Befestigers kann auch den Zweck verfolgen beispielsweise bestimmte Regionen (Vertiefungen, Grate) besonders aufnahmefähig für die Beschichtung werden zu lassen. Umgekehrt können auch Verfahrensschritte unternommen werden, um bestimmte Oberflächenbereiche, Oberflächenteilbereiche von der Beschichtung auszuschliessen, beispielsweise um einen solche Beschichtung auf einem farblich behandelten Kopf oder einem Kraftangriff nicht wirksam werden zu lassen.

Das eigentliche Aufbringen des Beschichtungsmittels wird wesentlich durch die Natur des Beschichtungsmittels (Feststoff, Lösung) bestimmt. Im Bedarfsfall kann ein einzelnes oder wiederholtes Anwenden eines einzelnen oder einer Folge von Prozessschritten wie
- Tauchverfahren,
- Sprühverfahren,
- Bedampfungsverfahren
- Zentrifugenverfahren
- Pulverbeschichtung
in Frage kommen.

Bei Tauchverfahren werden die Befestiger ganz oder teilweise in das Beschichtungsmittel getaucht. Im Sprühverfahren werden die Befestiger besprüht statt getaucht, beim Bedampfungsverfahren einer (Beschichtungsmittel-)Dampfquelle ausgesetzt. In allen Fällen können die Befestiger einzeln, als Schüttgut in Körben oder chargiert auf Gestellen bzw. Lochblechen angeordnet sein. Das Zentrifugenverfahren ist ein Tauchverfahren, bei dem die in einem Korb befindlichen Befestiger zunächst getaucht werden und danach überschüssiges Beschichtungsmittel abgeschleudert wird. Denkbar ist ebenfalls, dass eine Trockenmischung aus Festschmierstoffen auf statisch aufgeladene Befestiger aufgebracht wird, ähnlich einer Pulverbeschichtung.

Der Schritt des "Verfestigens" desaufgebrachten Beschichtungsmittel fasst verschiedene nachgeschaltete Prozesse zusammen, die der Fixierung des aufgebrachten Beschichtungsmittels dienen. Die kann je nach Aufbringverfahren und eingesetztem Beschichtungsmittel sein: Eine Trocknung, UV- Härtung, ein Einbrennen, eine Vernetzung. Dazu übliche technische Hilfsmittel sind Öfen, Bestrahlungsvorrichtungen, Vakuumtrocknung oder Lagerplätze für das Ablaufen einer chemischen Reaktion. Je nach Einsatzprofil können diese Verfestigungsschritte mehrfach und/oder als Abfolge vorgenommen werden.

Die im vorliegenden Verfahren angesprochenen Befestiger sind, wie erwähnt, bevorzugt Schrauben, selbstbohrende und/oder gewindeformende Schrauben, Niete bzw. Nägel. Die Anwendbarkeit von Verfahren, Beschichtungsmittel auf die beschriebenen Befestiger sei hierbei nicht einschränkend verstanden, die Anwendbarkeit ist auf ähnliche Anwendungsfälle übertragbar.

Als eine bevorzugte Anwendungsvariante hat sich hierbei herausgestellt, kommerziell hergestellte Beschichtungsmittel um die jeweils nach der Erfindung fehlende Komponente zu ergänzen. Das erlaubt auch, etablierte Beschichtungsverfahren für so ein Mittel wiederzuverwenden. So kann, ganz im Sinne der Erfindung, eine wässrige Lösung mit mikroverkapselten Wachsen mit einem mikrogranulierten Thermoplast bzw. Thermoplastmischung ergänzt werden.

Versuche haben ergeben, dass bei Versuchsanordnungen wie oben beschrieben (Anordnung 1 bzw. 2) mit Beschichtungen nach Stand der Technik Ausfallraten von über 50% auftraten. Eine Beschichtung mit einer Mixtur aus 2 Thermoplasten senkte die Ausfallrate auf 10% und darunter. Bemerkenswert ist vor allem, dass bei einer Versuchsanordnung mit einem Sandwich aus 50mm Mineralwolle auf 10mm Stahl S500 sogar 9x weniger Ausfälle zu verzeichnen waren.

## Patentansprüche

1. Selbstbohrende Schraube mit einer Beschichtung aus mindestens zwei unterschiedlichen Festschmierstoffen, **wobei** der erste Festschmierstoff ein Thermoplast oder ein Wachs ist und der zweite Festschmierstoff mindestens ein weiterer Thermoplast ist.

2. Selbstbohrende Schraube mit einer Beschichtung nach Anspruch 1, **dadurch gekennzeichnet, dass** der erste und der zweite Festschmierstoff als Mikrogranulat vorliegen, bevorzugt in einer Nenngrösse zwischen 5 und 20µm.

3. Selbstbohrende Schraube nach Anspruch 1-2, **dadurch gekennzeichnet, dass** der erste Festschmierstoff Wachs ist und Paraffin, Stearin oder eine Mischung hiervon umfasst.

4. Selbstbohrende Schraube mit einer Beschichtung nach Anspruch 1, **dadurch gekennzeichnet, dass** ein Bestandteil des ersten Festschmierstoffs Polyethylen (PE) ist und Bestandteile des zweiten Festschmierstoffes die Thermoplaste Polyvinylchlorid (PVC) und / oder Polyvinylbutyral (PVB) sind.

5. Verfahren zum Beschichten einer selbstbohrenden Schraube mit folgenden Schritten:
- Bereitstellen einer zu beschichtenden Schraube
- Aufbringen einer Lösung aus mindestens zwei unterschiedlichen Festschmierstoffen, wobei der erste Festschmierstoff ein Thermoplast oder ein Wachs ist und der zweite Festschmierstoff mindestens ein weiterer Thermoplast ist
- Verfestigen des aufgebrachten Beschichtungsmittels

6. Verfahren nach Anspruch 5, **dadurch gekennzeichnet, dass** vor dem Schritt des Aufbringens des Beschichtungsmittels eine Vorbehandlung erfolgt, als Auswahl aus ein oder mehreren Verfahrensschritten wie Reinigen, Abdecken von Teiloberflächen, Vorbehandeln von Teiloberflächen zur Verbesserung der Aufnahmefähigkeit des Beschichtungsmittels.

7. Verfahren nach Anspruch 5-6, **dadurch gekennzeichnet, dass** das Aufbringen des Beschichtungsmittels erfolgt durch einzelnes oder wiederholtes Anwenden eines einzelnen oder einer Folge von Prozessschritten wie
- Tauchverfahren,
- Sprühverfahren,
- Bedampfungsverfahren
- Zentrifugenverfahren
- Pulverbeschichtung

8. Verfahren nach Anspruch 5-7, **dadurch gekennzeichnet, dass** das Verfestigen des aufgebrachten Beschichtungsmittels erfolgt durch einzelnes oder wiederholtes Anwenden eines einzelnen oder einer Folge von Prozessschritten wie:
- Trocknung bzw. Vakuumtrocknung
- UV- bzw. IR Härtung
- Einbrennen
- Vernetzung

## Claims

1. A self-drilling screw with a coating of at least two different solid lubricants, **wherein** the first lubricant is a thermoplastic or a wax and the second solid lubricant is at least one further thermoplastic.

2. The self-drilling screw with a coating according to claim 1, **characterized in that** the first and the second solid lubricant are present as micro-granulate, preferably in a nominal size between 5 and 20 µm.

3. The self-drilling screw according to claims 1 - 2, **characterized in that** the first solid lubricant is wax and comprises kerosene, stearin, or a mixture thereof.

4. The self-drilling screw with a coating according to claim 1, **characterized in that** a component of the first solid lubricant is polyethylene (PE) and components of the second solid lubricant are the thermoplastics polyvinyl chloride (PVC) and/or polyvinyl butyral (PVB).

5. A method for coating a self-drilling screw, comprising the following steps:
- providing a screw to be coated,
- applying a solution of at least two different solid lubricants, wherein the first solid lubricant is a thermoplastic or a wax and the second solid lubricant is at least one further thermoplastic,
- solidifying the applied coating agent.

6. The method according to claim 5, **characterized in that,** prior to the step of applying the coating agent, a pretreatment is carried out, selected from one or more method steps such as cleaning, covering of partial surfaces, pretreating partial surfaces to improve the absorption capacity of the coating agent.

7. The method according to claims 5 - 6, **characterized in that** applying the coating agent is carried out by a single or repeated application of a single or a sequence of process steps, such as
- dipping process,
- spraying process,
- vapor deposition process,
- centrifugal process,
- powder coating process.

8. The method according to claims 5 - 7, **characterized in that** solidifying the applied coating agent is carried out by a single or repeated application of a single or a sequence of process steps, such as:
- drying or vacuum drying,
- UV or IR curing,
- stoving,
- cross-linking.

## Revendications

1. Vis autotaraudeuse avec un revêtement d'au moins deux lubrifiants solides différents, **sachant** que le premier lubrifiant solide est un thermoplastique ou une cire et le deuxième lubrifiant solide est au moins un autre thermoplastique.

2. Vis autotaraudeuse avec un revêtement selon la revendication 1, **caractérisée en ce que** le premier et le deuxième lubrifiant solide sont présents sous la forme d'un microgranulat, de préférence dans une taille nominale variant entre 5 et 20 µm.

3. Vis autotaraudeuse selon la revendication 1-2, **caractérisée en ce que** le premier lubrifiant solide est de la cire et comprend de la paraffine, de la stéarine ou un mélange de celles-ci.

4. Vis autotaraudeuse avec un revêtement selon la revendication 1, **caractérisée en ce qu'**un composant du premier lubrifiant solide est du polyéthylène (PE) et les composants du deuxième lubrifiant solide sont les thermoplastiques : polychlorure de vinyle (PCV) et/ou polyvinylbutyral (PVB).

5. Procédé d'enduction d'une vis autotaraudeuse avec les étapes suivantes :
- préparation d'une vs à revêtir,
- application d'une solution composée d'au moins deux lubrifiants solides différents, sachant que le premier lubrifiant solide est un thermoplastique ou une cire et le deuxième lubrifiant solide est au moins un autre thermoplastique,
- stabilisation du matériau de revêtement appliqué.

6. Procédé selon la revendication 5, **caractérisé en ce qu'**avant l'étape d'application du matériau de revêtement, a lieu un prétraitement sous la forme d'une sélection d'une ou plusieurs étapes de procédé comme le nettoyage, la couverture des surfaces partielles, le prétraitement des surfaces partielles afin d'améliorer la réceptivité du matériau de revêtement.

7. Procédé selon les revendications 5-6, **caractérisé en ce que** l'application du matériau de revêtement a lieu en utilisant de façon unique ou répétée une étape de processus individuelle ou une succession d'étapes de processus, comme
- le procédé de trempage,
- le procédé d'aspersion,
- le procédé de vaporisation,
- le procédé de centrifugation
- le revêtement de poudre.

8. Procédé selon les revendications 5-7, **caractérisé en ce que** la stabilisation du matériau de revêtement appliqué a lieu en utilisant de façon unique ou répétée une étape de processus individuelle ou une succession d'étapes de processus, comme
- le séchage ou séchage sous vide,
- la polymérisation aux UV ou IR,
- la cuisson,
- la réticulation.
